# EUROPÄISCHE PATENTANMELDUNG

(11) **EP 4 446 211 A1**
(43) Veröffentlichungstag der Anmeldung: **16.10.2024**
(21) Anmeldenummer: 24169366.2
(22) Anmeldetag: 10.04.2024
(51) Int. Cl.: B62M 25/04

(54) **BETÄTIGUNGSANORDNUNG FÜR EIN GETRIEBE SOWIE FAHRZEUG**

(30) Priorität: 13.04.2023 DE 102023203343
(71) Anmelder: ZF Friedrichshafen AG, 88046 Friedrichshafen (DE)
(72) Erfinder: Doepfert, Hagen, 88131 Lindau (DE); Riedisser, Thomas, 88138 Sigmarszell (DE); Ziemer, Peter, 86825 Bad Woerishofen (DE); Wiemer, Michel, 88250 Weingarten (DE); Kruse, Kevin, 72131 Ofterdingen (DE)
(74) Vertreter: ZF Friedrichshafen AG

(57) **Zusammenfassung**

Die Erfindung betrifft eine Betätigungsanordnung für ein Getriebe, welche eine verschwenkbare Klinke (14) und eine drehbare Schaltwalze (10) aufweist. Die Schaltwalze (10) ist dazu ausgebildet, die Klinke (14) durch Rotation in eine erste Drehrichtung von einer ersten in eine zweite Winkelstellung mit der Betätigungsfläche (20) aus einer Eingriffsposition in eine Freigabeposition zu drücken und ein Einfallen der Klinke (14) durch Rotation in die zweite Drehrichtung von der zweiten in die erste Winkelstellung aus der Freigabeposition in die Eingriffsposition zu gestatten. Die Betätigungsanordnung weist eine Betätigungsvorrichtung (30) auf, welche dazu ausgebildet ist, die Klinke (14) aus der Freigabeposition in die Eingriffsposition zu verstellen. Ein Verstellen der Klinke (14) aus der Freigabeposition in die Eingriffsposition durch die Betätigungsvorrichtung (30) bei der Rotation der Schaltwalze (10) in die zweite Drehrichtung erfolgt erst bei einer dritten Winkelstellung der Schaltwalze (10) zwischen der ersten und der zweiten Winkelstellung.

## Beschreibung

Die vorliegende Erfindung bezieht sich auf eine Betätigungsanordnung für ein Getriebe. Zudem bezieht sich die Erfindung auf ein Fahrzeug.

Viele Getriebe werden mit Schaltwalzen geschaltet. Durch ein Rotieren der Schaltwalze können unterschiedliche Schaltelemente zentral geschaltet werden, um einen gewünschten Gang bereitzustellen. Beispielsweise werden je nach rotatorischer Position der Schaltwalze unterschiedliche Drehelemente von Planetenradsätzen des Getriebes drehfest miteinander verbunden. Durch die Drehbewegung kann ein Eingriff einer Klinke mit einem Schaltelementteil gelöst oder hergestellt werden. Je nach Drehrichtung kann beispielsweise hochgeschaltet und runtergeschaltet werden.

Die Klinke wird beispielsweise mit dem Schaltelementteil in Eingriff gebracht, um dieses Schaltelementteil festzusetzen oder drehfest mit einem anderen Teil zu verbinden. In einer Eingriffsposition greift ein Endbereich der Klinke dann beispielsweise mit einer Außenverzahnung des Schaltelementteils ein. Vor und bei einem Verstellen der Klinke in den Eingriff mit dem Schaltelementteil kann das Schaltelementteil aber noch rotieren. Je nach Rotationsgeschwindigkeit, Verstellgeschwindigkeit der Klinke und auch Position der Verzahnung relativ zu der Klinke beim Einlegversuch kann die Klinke aber unerwünschter Weise abgewiesen werden. Beispielsweise kann eine langsam eingelegte Klinke bei einem schnell drehenden Schaltelementelementteil immer auf eine Zahnspitze der Außenverzahnung treffen und somit von dem Schaltelementteil abprallen. Die Klinke kann dann anfangen zu ratschen. Das Ratschen kann zu einem erhöhten Verschleiß an der Klinke und dem Schaltelementteil führen. Erst nach einiger Zeit, zufällig oder auch gar nicht kommt dann die Klinke in einen Eingriff mit der Außenverzahnung, wird dort reibschlüssig gehalten und beendet so die relative Rotation des Schaltelementteils. Je nach Fahrzustand kann ein Schaltvorgang so auch sehr lange dauern oder gar nicht möglich sein. Insofern gibt es einen Bedarf für eine zuverlässigere Betätigungsanordnung für ein Getriebe.

Es ist daher Aufgabe der Erfindung, eine verbesserte Betätigungsanordnung für ein Getriebe zur Verfügung zu stellen. Diese Aufgabe wird durch die Gegenstände mit den Merkmalen der unabhängigen Patentansprüche gelöst. Vorteilhafte Ausgestaltungen und Weiterbildungen gehen aus den Unteransprüchen hervor.

Ein erster Aspekt der Erfindung betrifft eine Betätigungsanordnung für ein Getriebe. Ein Getriebe kann eine Vorrichtung sein, welche ein Antriebsmoment von einem Antrieb an einen Abtrieb überträgt. Das Getriebe kann beispielsweise das Antriebsmoment von einem Motor an einen Reifen eines Fahrzeugs übertragen. Das Getriebe kann beispielsweise auch eine Muskelkraft von einer Tretkurbelwelle an ein Laufrad übertragen. Das Getriebe kann dazu ausgebildet sein, schaltbar unterschiedliche Gänge für die Drehmomentübertragung bereitzustellen. Das Getriebe kann dafür beispielsweise jeweilige Stirnradstufen und alternativ oder zusätzlich jeweilige Planetenradsätze aufweisen. Das Getriebe kann vorzugsweise als Getriebe eines Fahrrads ausgebildet sein oder alternativ als Getriebe eines Personenkraftwagens. Das Getriebe kann bei einem Fahrrad beispielsweise als Nabengetriebe oder Tretlagergetriebe ausgebildet sein. Ein Gang kann beispielsweise eine feste Übersetzung zwischen einem Eingang und einem Ausgang des Getriebes bereitstellen.

Die Betätigungsanordnung weist eine Schaltwalze auf. Die Schaltwalze kann ein Bauteil sein, durch dessen Betätigung ein Gangwechsel des Getriebes bewirkt wird. Beispielsweise kann die Schaltwalze rotiert werden, um unterschiedliche Schaltelemente zu betätigen. Durch die Schaltwalze können beispielsweise zentral durch eine einzige Betätigung die Gänge des Getriebes in Reihe durchgeschaltet werden. Die Schaltwalze kann wenigstens in eine erste Drehrichtung und eine dazu entgegengesetzte zweite Drehrichtung gedreht werden. Beispielsweise kann je nach Drehrichtung und alternativ oder zusätzlich je nach Winkelposition der Schaltwalze so hochgeschaltet und runtergeschaltet werden. Die Schaltwalze ist beispielsweise um deren Längsachse drehbar gelagert.

Die Schaltwalze weist wenigstens eine Betätigungsfläche auf. Die Betätigungsfläche kann ein Teilbereich einer Außenumfangsfläche der Schaltwalze sein. Die Betätigungsfläche kann beispielsweise gegenüber einer Tangente einer gedachten zylindrischen Schaltwalze wenigstens teilweise geneigt ausgebildet sein. Die Betätigungsfläche kann beispielsweise wenigstens einen Teil eines Nockens auf der Schaltwalze ausbilden. Die Schaltwalze kann beispielsweise als metallisches Bauteil ausgebildet sein. Die Schaltwalze kann eine zylindrische Grundform haben, wobei eine Mantelfläche eine von der Zylinderform abweichende Form mit Nocken aufweisen kann.

Die Betätigungsanordnung weist eine verschwenkbar gelagerte Klinke auf. Die Klinke kann beispielsweise an einem Gehäuse des Getriebes verschwenkbar gelagert sein, beispielsweise mittels eines Bolzens. Die Betätigungsanordnung kann auch mehrere Klinken aufweisen, welche zusammen an dem Bolzen oder auch separat gelagert sein können. Die folgenden Erläuterungen gelten gleichermaßen auch für eine Betätigungsanordnung mit mehreren Klinken, sofern anwendbar.

Die Klinke ist zwischen einer Eingriffsposition, in welcher die Klinke in einem Eingriff mit einem zugeordneten Schaltelementteil ist, und einer Freigabeposition, in welcher die Klinke das zugeordnete Schaltelementteil freigibt, durch Verschwenken verstellbar. In der Eingriffsposition kann beispielsweise ein der Schaltwalze abgewandter Endbereich der Klinke mit einer Außenverzahnung des Schaltelementteils eingreifen. Das Schaltelementteil kann sich so beispielsweise nicht mehr um seine Drehachse drehen. In der Freigabeposition kann das Schaltelementteil beispielsweise nicht im Eingriff mit der Außenverzahnung des Schaltelementteils sein. Das Schaltelementteil kann sich so beispielsweise frei um seine Drehachse drehen. Die Klinke kann beispielsweise als metallisches Bauteil ausgebildet sein.

Die Schaltwalze kann beispielsweise dazu ausgebildet, durch Rotation die Klinke aus einem Eingriff mit einem Schaltelementteil zu drücken, um ein Schaltelement des Getriebes zu betätigen. Dadurch kann ein Gangwechsel erfolgen. In bestimmten Positionen der Schaltwalze kann die Klinke in Eingriff mit dem Schaltelementteil gelangen. Dazu kann die Klinke beispielsweise in Richtung des Schaltelementteils mit einer Feder vorgespannt sein. Die Schaltwalze kann dazu ausgebildet sein, durch Rotation gangabhängig eine Klinke aus einem Eingriff mit einem Schaltelementteil zu drücken, um das Schaltelement des Getriebes zu betätigen. Gangabhängig kann sich auch auf einen derzeitigen Gang, einen Gangwechsel oder auch einen Gang beziehen, der eingelegt wird. Die Klinke kann als bewegliches metallisches Teil ausgebildet sein, welches durch Einwirken der Schaltwalze verschwenkt wird. Dazu kann ein Ende der Klinke wenigstens in bestimmten Schaltzuständen mit der Schaltwalze kontaktiert sein. Ein anderes Ende der Klinke kann dazu ausgebildet sein, mit dem Schaltelementteil einzugreifen. Ein Betätigungsbereich kann beispielsweise von einem in Umfangsrichtung benachbarten Bereich des Walzenkörpers vorstehen. Ein Betätigungsbereich kann beispielsweise durch eine Seite einer Nocke des Walzenkörpers gebildet sein.

Ein Schaltelement des Getriebes kann beispielsweise zwei Elemente des Getriebes, wie Drehelemente eines Planetenradsatzes oder Wellen einer Stirnradstufe, miteinander drehfest verbinden. Beispielsweise kann durch eine Betätigung eines Schaltelements das Schaltelement zwischen einem offenen und geschlossenen Zustand verstellt werden. In dem offenen Zustand kann das Schaltelement beispielsweise kein Drehmoment übertragen. In dem geschlossenen Zustand kann das Schaltelement beispielsweise ein Drehmoment übertragen. Ein Schaltelement kann beispielsweise als formschlüssige Kupplung ausgebildet sein. Ein Schaltelement kann als Bremse fungieren, mittels welchem ein bewegliches Teil des Getriebes festsetzbar ist. Mit dem Schaltelementteil kann eine Welle permanent drehfest verbunden sein.

Das Schaltelementteil kann beispielsweise als eine Hälfte einer Kupplung des Schaltelements ausgebildet sein. Das Schaltelementteil kann beispielsweise wenigstens in bestimmten Gängen des Getriebes bei Anliegen eines Antriebsmoments rotieren. Das Schaltelementteil kann sich beispielsweise wenigstens in bestimmten Gängen an der Klinke abstützen und so an einer Rotation gehindert sein. Beispielsweise kann die Klinke in einem Gang mit einer Außenverzahnung des Schaltelementteils in Eingriff stehen, aus welchem die Klinke durch die Schaltwalze zum Wechseln in einen anderen Gang gedrückt werden kann. Das Schaltelementteil weist beispielsweise an seinem Außenumfang eine Verzahnung für den Eingriff mit der Klinke auf. Das Schaltelementteil kann beispielsweise als Bremsring ausgebildet sein.

Durch Rotation der Schaltwalze kann beispielsweise ein Betätigungsbereich gegen die Klinke drücken und diese so aus dem Eingriff mit dem Schaltelementteil lösen. Je nach Winkelstellung der Schaltwalze kann dann die Klinke aus dem Eingriff mit dem Schaltelementteil gedrückt werden. Bestimmte rotatorische Winkelpositionen der Schaltwalze können jeweils zu einem Gang des Getriebes entsprechen. Beispielsweise kann sowohl in einem ersten als auch einem zweiten Gang der Eingriff der Klinke mit dem Schaltelementteil aufgehoben sein. In weiteren Gängen, beispielsweise einem dritten Gang, kann sich die Klinke dagegen in Eingriff mit dem Schaltelementteil befinden.

Die Schaltwalze ist dazu ausgebildet, durch Rotation in die erste Drehrichtung von einer ersten Winkelstellung in eine zweite Winkelstellung mit der Betätigungsfläche die Klinke aus der Eingriffsposition in die Freigabeposition zu drücken. Dafür kann die Betätigungsfläche an der Klinke anliegen und beispielsweise die Klinke aus dem Eingriff heraus verschwenken. Ein der Schaltwalze abgewandtes Ende der Klinke wird so beispielsweise von dem Schaltelementteil abgehoben. Die Schaltwalze kann also beispielsweise direkt das Verstellen der Klinke aus der Eingriffsposition in die Freigabeposition verursachen.

Die Schaltwalze ist dazu ausgebildet, durch Rotation in die zweite Drehrichtung von der zweiten Winkelstellung in die erste Winkelstellung ein Einfallen der Klinke aus der Freigabeposition in die Eingriffsposition zu gestatten, beispielsweise durch die Betätigungsfläche. Beispielsweise wird die Betätigungsfläche dabei wieder so zurückgedreht, dass die Klinke zurück in deren Eingriffsposition verschwenkbar ist. Die Verstellbewegung der Klinke zurück in die Eingriffsposition wird so nicht mehr durch die Schaltwalze blockiert. In der zweiten Winkelstellung kann die Betätigungsfläche dagegen an der Klinke anliegen und diese in der Freigabeposition halten. Die eigentliche Verstellbewegung der Klinke aus der Freigabeposition kann jedoch durch ein anderes Bauteil, wie ein Federelement, bewirkt werden.

Die Betätigungsanordnung weist eine Betätigungsvorrichtung auf, welche dazu ausgebildet ist, die Klinke aus der Freigabeposition in die Eingriffsposition zu verstellen. Dadurch kann die Verstellbewegung in die Eingriffsposition mit viel Kraft und alternativ oder zusätzlich einer hohen Geschwindigkeit erfolgen. Zudem kann die Verstellbewegung in die Eingriffsposition von einer Bewegung der Schaltwalze entkoppelt werden. Die Schaltwalze muss diese Verstellbewegung also beispielsweise lediglich freigeben. Dadurch kann die Klinke besonders zuverlässig in Eingriff mit dem Schaltelementteil gebracht werden.

Ein Verstellen der Klinke aus der Freigabeposition in die Eingriffsposition durch die Betätigungsvorrichtung erfolgt bei der Rotation der Schaltwalze in die zweite Drehrichtung erst bei einer dritten Winkelstellung der Schaltwalze. Die dritte Winkelstellung ist zwischen der ersten Winkelstellung und der zweiten Winkelstellung. Ausgehend von der ersten Winkelstellung bei Drehung in die erste Drehrichtung passiert die Schaltwalze beispielsweise zunächst die dritte Winkelstellung, bevor die zweite Winkelstellung erreicht wird. Ausgehend von der zweiten Winkelstellung bei Drehung in die zweite Drehrichtung passiert die Schaltwalze beispielsweise zunächst die dritte Winkelstellung, bevor die erste Winkelstellung erreicht wird.

Die Bewegung der Klinke in Richtung der Eingriffsposition beginnt also beispielsweise erst, wenn die Schaltwalze die dritte Winkelstellung bei der Rotation in die zweite Drehrichtung erreicht hat. Es kann so eine Art Verstellhysterese implementiert werden. Die Klinke folgt also beispielsweise bei der Rotation der Schaltwalze aus der zweiten Winkelstellung in die zweite Drehrichtung nicht einer Kontur des Betätigungsbereichs der Schaltwalze. Stattdessen hebt beispielsweise das der Schaltwalze zugewandte Ende der Klinke von dem Betätigungsbereich der Schaltwalze ab. Bei der Rotation der Schaltwalze in die zweite Drehrichtung ausgehend von der zweiten Winkelstellung verbleibt die Klinke also beispielsweise bis zum Erreichen der dritten Winkelstellung durch die Schaltwalze in deren Freigabeposition. Die Klinke bewegt sich dabei beispielsweise nicht. Nach Erreichen der dritten Winkelstellung beginnt sich die Klinke dagegen in Richtung der Eingriffsposition zu folgen. Diese Verstellbewegung kann dann eine höhere Geschwindigkeit haben, als dies bei einem Anliegen der Klinke an dem Betätigungsbereich aufgrund einer Neigung des Betätigungsbereich, einer Form des Betätigungsbereichs und einer Rotationsgeschwindigkeit der Schaltwalze sonst möglich wäre. Dadurch kann die Klinke besonders zuverlässig in Eingriff mit dem Schaltelementteil gebracht werden. Die Betätigungsanordnung kann beispielsweise einen Beginn des Einfallens der Klinke zum Verstellen aus der Freigabeposition in die Eingriffsposition bei der Rotation der Schaltwalze in die zweite Drehrichtung von der zweiten Winkelstellung zu der dritten Winkelstellung verzögern.

Die Betätigungsvorrichtung kann dazu ausgebildet sein, eine Verstellkraft auf die Klinke erst bei Erreichen der dritten Winkelstellung durch die von der zweiten Winkelstellung in die zweite Drehrichtung rotierende Schaltwalze aufzubringen. Vorher kann beispielsweise ein entsprechendes Kraftaufbringungselement, wie eine Feder, von der Klinke entkoppelt sein oder festgehalten sein. Die Verstellkraft kann aber auch beispielsweise permanent auf die Klinke wirken, beispielsweise indem die Klinke mittels eines Federelements zu der Eingriffsposition vorgespannt ist. Die Betätigungsanordnung kann beispielsweise dazu ausgebildet sein, eine Verstellbewegung der Klinke von der Freigabeposition zu der Eingriffsposition oder eine Kraftaufbringung auf die Klinke zu deren Verstellung in die Eingriffsposition zu blockieren, solange die Schaltwalze noch nicht die dritte Winkelstellung bei der Rotation aus der zweiten Winkelstellung in die zweite Drehrichtung erreicht hat. Die Betätigungsanordnung kann beispielsweise dazu ausgebildet sein, eine Verstellbewegung der Klinke von der Freigabeposition zu der Eingriffsposition freizugeben, sobald die Schaltwalze die dritte Winkelstellung bei der Rotation aus der zweiten Winkelstellung in die zweite Drehrichtung erreicht hat.

In einer Ausführungsform der Betätigungsanordnung ist es vorgesehen, dass die Betätigungsanordnung dazu ausgebildet ist, die Klinke bei dem Verstellen aus der Freigabeposition in die Eingriffsposition mit einer größeren Geschwindigkeit zu verschwenken als bei dem Verstellen aus der Eingriffsposition in die Freigabeposition. Die Klinke kann hierdurch besonders sicher in Eingriff mit dem Schaltelementteil gelangen und dennoch für das Rotieren der Schaltwalze eine geringe Geschwindigkeit gewählt werden. Beispielsweise kann die Schaltwalze manuell über einen Kabelzug von einem Fahrer eines Fahrrads rotiert werden, ohne dass bei einer langsamen Betätigung die Gefahr eines Gangwechselfehlschlags erhöht wird. Die Geschwindigkeit beim Verstellen aus der Eingriffsposition in die Freigabeposition kann beispielsweise durch die Form der Betätigungsfläche und eine Rotationsgeschwindigkeit der Schaltwalze definiert sein. Die Geschwindigkeit beim Verstellen aus der Eingriffsposition kann beispielsweise unabhängig von einer Rotationsgeschwindigkeit der Schaltwalze sein. Die Geschwindigkeit beim Verstellen aus der Eingriffsposition kann sich beispielsweise auch aus einer Form eines Haltelements ergeben, an welchem die Klinke bei dem Verstellen aus der Freigabeposition in die Eingriffsposition abgleitet. Beispielsweise kann also die Klinke bei dem Verstellen aus der Eingriffsposition in die Freigabeposition an der Betätigungsfläche der Schaltwalze und bei dem Verstellen aus der Freigabeposition in die Eingriffsposition an einem Bauteil der Betätigungsvorrichtung abgleiten.

In einer Ausführungsform der Betätigungsanordnung ist es vorgesehen, dass die Betätigungsvorrichtung ein Betätigungselement aufweist, welches dazu ausgebildet ist, die Klinke bei der Rotation der Schaltwalze in die zweite Drehrichtung erst ab einem Passieren der dritten Winkelstellung in die Eingriffsposition zu drücken. Das Betätigungselement kann beispielsweise ein Federelement sein, welches durch das Rotieren der Schaltwalze in der ersten Drehrichtung und in die zweite Winkelstellung und alternativ oder zusätzlich durch ein Verstellen der Klinke aus der Eingriffsposition in die Freigabeposition vorgespannt wird. Dadurch kann die Betätigungsanordnung beispielsweise passiv arbeiten. Die in dem Federelement so gespeicherte kinetische Energie kann zum Drücken der Klinke in die Eingriffsposition genutzt werden. Das Betätigungselement kann aber beispielsweise auch als aktives Element ausgebildet sein, beispielsweise als Servo.

In einer Ausführungsform der Betätigungsanordnung ist es vorgesehen, dass das Betätigungselement als Federelement ausgebildet ist. Beispielsweise kann das Federelement als Blattfeder oder Schraubenfeder ausgebildet sein. Das Federelement kann beispielsweise als metallisches Bauteil ausgebildet sein. Ein Federelement kann ein Bauteil sein, welches durch eine elastische Verformung eine kinetische Energie speichern kann.

In einer Ausführungsform der Betätigungsanordnung ist es vorgesehen, dass die Betätigungsanordnung ein Befestigungselement aufweist, an welchem das Federelement durch eine Federwirkung reibschlüssig geklemmt gelagert ist. Das Befestigungselement kann beispielsweise eine Aufnahmeöffnung aufweisen, in welcher das Federelement mit einem Endbereich aufgenommen ist. Dieser Endbereich kann zum Einführen in die Aufnahmeöffnung elastisch verformt werden. Das Federelement kann so einfach gehalten und montiert werden. Beispielsweise kann das Federelement in die Aufnahmeöffnung seitlich eingeschoben werden, während der Monteur den einzuführenden Endbereich zusammendrückt. Die Federwirkung kann beispielsweise von dem Federelement erzeugt werden und einer Federkraft entsprechen, mit welcher das Federelement an dem Befestigungselement reibschlüssig gehalten wird.

Sofern mehrere Klinken vorgesehen sind, kann für jede Klinke ein korrespondierendes Federelement als korrespondierendes Betätigungselement der Betätigungsvorrichtung vorgesehen sein. Diese Vielzahl von Federelementen können gemeinsam als einstückiges Bauteil ausgebildet sein. Dieses einstückige Bauteil kann an dem Befestigungselement durch die Federwirkung reibschlüssig geklemmt gelagert sein. Alternativ oder zusätzlich kann das Federelement auch formschlüssig an dem Befestigungselement gehalten sein. Das Federelement kann an dem Befestigungselement gesichert werden, beispielsweise durch einen Sicherungsstift oder einen Bolzen. Das Befestigungselement kann beispielsweise als ein an einem Getriebegehäuse befestigtes Bauteil oder als ein integraler Teil des Getriebegehäuses ausgebildet sein.

In einer Ausführungsform der Betätigungsanordnung ist es vorgesehen, dass die Betätigungsanordnung eine Haltefeder aufweist, welche die Klinke in der Freigabeposition hält. Dadurch kann ein Bewegen der Klinke verhindert werden, wenn die Schaltwalze aus der zweiten Winkelstellung in die zweite Drehrichtung rotiert wird und die Betätigungsfläche die Klinke nicht mehr in der Freigabeposition abstützt. Beispielsweise kann die Haltefeder bei der Rotation der Schaltwalze aus der zweiten Winkelstellung in die zweite Drehrichtung bis zum Erreichen der dritten Winkelstellung nicht mehr durch die Schaltwalze gestützt sein, aber eine Bewegung der Klinke in Richtung der Eingriffsposition unerwünscht sein. Beispielsweise kann die Klinke sonst bereits die Außenverzahnung des Schaltelementteils kontaktieren aber nicht schnell genug bewegt worden sein, um tatsächlich in den Eingriff zu gelangen. Eine solche Bewegung könnte beispielsweise durch Fahrzeugerschütterungen verursacht werden, sodass die Klinke dann anfängt zu ratschen. Die Haltefeder kann dies zuverlässig verhindern.

Die Haltefeder kann dazu ausgebildet sein, die Klinke in die Freigabeposition zu drücken. Die Haltefeder kann dafür beispielsweise als Blattfeder ausgebildet sein. Dadurch wird die Klinke auch bei einer unerwünschten Auslenkung, beispielsweise aufgrund einer sehr starken Erschütterung, welche die Haltekraft der Haltefeder überwindet, wieder zurück in die Freigabeposition gedrückt werden. Eine Federkraft des als Federelement ausgebildeten Betätigungselements, mit welcher die Klinke ab der dritten Winkelstellung in die Eingriffsposition gedrückt wird, kann bei dieser Bauweise beispielsweise größer als eine Federkraft der Haltefeder, mit welcher die Haltefeder die Klinke in die Freigabeposition drückt, sein. Dadurch kann dann die Betätigungsvorrichtung eine durch die Haltefeder erzeugte Haltekraft zuverlässig überwinden.

Die Haltefeder kann aber auch dazu ausgebildet sein, eine Reibung der Klinke zu erhöhen, um die Klinke in der Freigabeposition zu halten, beispielsweise gegenüber einer Bauweise ohne eine solche Haltefeder. Beispielsweise drückt die Haltefeder bei dieser Bauweise die Klinke axial gegen eine Lagerfläche, an welcher die Klinke verschwenkbar gelagert ist. Dadurch ist eine Verstellkraft im Vergleich zu einer Betätigungsanordnung ohne eine solche Haltefeder größer. Durch diese Reibungserhöhung kann ein Risiko eines unerwünschten frühzeitigen Verlassens der Freigabeposition, beispielsweise durch Erschütterungen, reduziert werden. Zudem ist eine Verstellkraft für das Verschwenken der Klinke unabhängig von einer Schwenkposition der Klinke und es. Die Haltefeder kann dafür beispielsweise als Wellfeder ausgebildet sein, welche beispielsweise an einem Lagerbolzen für die Klinke angeordnet ist und axial gegen die Klinke drückt.

Die Haltefeder und das als Federelement ausgebildete Betätigungselement können beispielsweise einstückig ausgebildet sein. Beispielsweise bildet dann ein Endbereich dieses Bauteils die Haltefeder und ein entgegengesetzter Endbereich das Betätigungselement. Eine unterschiedliche Federkraft kann dabei beispielsweise durch eine Geometrie vorgegeben werden. Beispielsweise kann der die Haltefeder ausbildende Endbereich dieses Bauteils weniger breit und alternativ oder zusätzlich dünner sein als der das Betätigungselement ausbildende Endbereich. Die Betätigungsanordnung kann so wenige Teile aufweisen. Zudem kann eine Montage so besonders einfach sein.

In einer Ausführungsform der Betätigungsanordnung ist es vorgesehen, dass die Schaltwalze dazu ausgebildet ist, das Verstellen der Klinke aus der Freigabeposition in die Eingriffsposition durch die Betätigungsvorrichtung freizugeben. Beispielsweise kann die Schaltwalze bei Erreichen der dritten Winkelstellung bei der Rotation aus der zweiten Winkelstellung in die zweite Drehrichtung eine Blockierung des Betätigungselements aufheben. Beispielsweise wird vorher das als Federelement ausgebildete Betätigungselement von der Schaltwalze gehalten oder anderweitig blockiert, sodass das Federelement die Klinke nicht in die Eingriffsposition drücken kann. Die Schaltwalze kann dafür beispielsweise eine weitere Betätigungsfläche aufweisen, welche beispielsweise axial parallel zu der Betätigungsfläche angeordnet ist, welche die Klinke aus der Eingriffsposition in die Freigabeposition drückt. Diese weitere Betätigungsfläche kann beispielsweise das als Federelement ausgebildete Betätigungselement aus einem Eingriff mit der Klinke drücken, wenn sich die Schaltwalze in einer Stellung zwischen der zweiten Winkelstellung und der dritten Winkelstellung befindet. Wenigstens bei Rotation der Schaltwalze aus der zweiten Winkelstellung in die zweite Drehrichtung kann ein Kontakt dieser weiteren Betätigungsfläche mit dem als Federelement ausgebildeten Betätigungselement aufgehoben werden, sodass das als Federelement ausgebildete Betätigungselement gegen die Klinke drücken kann, um diese in die Eingriffsposition zu bewegen. Die Schaltwalze kann so auch ein Verstelltiming für die Betätigungsvorrichtung vorgeben. Die Schaltwalze kann so beispielsweise auch einen Teil der Betätigungsvorrichtung bilden. So können besonders wenig Teile notwendig sein.

In einer Ausführungsform der Betätigungsanordnung ist es vorgesehen, dass die Schaltwalze eine weitere Betätigungsfläche aufweist, mittels welcher das Verstellen der Klinke aus der Freigabeposition in die Eingriffsposition durch die Betätigungsvorrichtung freigebbar ist. Diese weitere Betätigungsfläche kann beispielsweise Teil einer weiteren Nockenbahn sein, welche ebenfalls der Klinke zugeordnet ist. Pro Klinke kann die Schaltwalze also beispielsweise zwei Nockenbahnen aufweisen.

In einer Ausführungsform der Betätigungsanordnung ist es vorgesehen, dass die weitere Betätigungsfläche an einer Umfangsfläche der Schaltwalze ausgebildet ist.

Die weitere Betätigungsfläche kann beispielsweise so wie die Betätigungsfläche zum Drücken der Klinke aus der Eingriffsposition in der Umfangsfläche der Schaltwalze angeordnet sein. Die weitere Betätigungsfläche kann so einfach und kostengünstig zu fertigen sein.

In einer Ausführungsform der Betätigungsanordnung ist es vorgesehen, dass die weitere Betätigungsfläche an einer Stirnfläche der Schaltwalze ausgebildet ist. Dadurch kann die Schaltwalze axial besonders kurz bauend sein. Die Stirnfläche kann sich beispielsweise orthogonal zu der Drehachse der Schaltwalze erstrecken.

Sofern mehrere Klinken vorgesehen sind, kann beispielsweise auch eine einer ersten Klinke zugeordnete weitere Betätigungsfläche in der Umfangsfläche ausgebildet sein und eine einer zweiten Klinke zugeordnete weitere Betätigungsfläche in der Stirnfläche.

In einer Ausführungsform der Betätigungsanordnung ist es vorgesehen, dass die Betätigungsvorrichtung ein Halteelement aufweist. Das Halteelement kann an der Schaltwalze gehalten sein. Beispielsweise kann das Halteelement axial an der Schaltwalze befestigt sein. Das Halteelement kann um einen vorgegebenen Drehbereich relativ zu der Schaltwalze zwischen einer ersten Relativstellung und einer zweiten Relativstellung rotierbar sein. Beispielsweise kann das Halteelement als Ring ausgebildet sein, welcher über die Schaltwalze gestülpt ist. Dieser Ring kann wenigstens einen radial nach innen vorstehenden Vorsprung aufweisen, welcher in einem Aufnahmebereich der Schaltwalze aufgenommen ist. Der Ring kann aber auch den Aufnahmebereich aufweisen und die Schaltwalze wenigstens einen radial nach außen vorstehenden Vorsprung. Dieser Aufnahmebereich kann beispielsweise nutförmig sein. Bei Erreichen der ersten Relativstellung oder der zweiten Relativstellung, abhängig von der Drehrichtung der Schaltwalze, wird das Halteelement dann beispielsweise wieder von der Schaltwalze mitgenommen. Diese Mitnahme erfolgt beispielsweise durch Anschlagen des Vorsprungs an einer Seitenwand des Aufnahmebereichs. Die Rotationsachse des Halteelements relativ zu der Schaltwalze ist beispielsweise koaxial mit einer Rotationsachse der Schaltwalze.

Das Halteelement kann dazu ausgebildet sein, bei Rotation der Schaltwalze in die erste Drehrichtung in seiner ersten Relativstellung zu sein, damit die Klinke durch die Betätigungsfläche der Schaltwalze aus der Eingriffsposition in die Freigabeposition gedrückt wird. Die Klinke liegt dann beispielsweise auf der Betätigungsfläche der Schaltwalze auf. Das Halteelement kann dazu ausgebildet sein, bei Rotation der Schaltwalze in die zweite Drehrichtung in seiner zweiten Relativstellung zu sein, um die Klinke bis zu der dritten Winkelstellung der Schaltwalze in der Freigabeposition zu halten. Beispielsweise liegt die Klinke bei der Rotation der Schaltwalze aus der zweiten Winkelstellung in die zweite Drehrichtung wenigstens bis zum Erreichen der dritten Winkelstellung der Schaltwalze auf dem Haltelement auf und wird so in der Freigabestellung gehalten. Dafür kann das Halteelement eine Haltefläche aufweisen, welche beispielsweise nockenartig vorsteht. Diese Haltefläche ist beispielsweise anders als die Betätigungsfläche der Schaltwalze geformt. Zusätzlich kann eine Feder vorgesehen sein, welche die Klinke zu deren Eingriffsposition vorspannt, beispielsweise dauerhaft.

In einer Ausführungsform der Betätigungsanordnung ist es vorgesehen, dass die Betätigungsanordnung ein Gehäuse des Getriebes aufweist. Das Gehäuse kann beispielsweise ein Gussbauteil oder Stahlbauteil sein. An dem Gehäuse können beispielsweise die Klinke, die Schaltwalze und das Schaltelementteil drehbar gelagert sein.

In einer Ausführungsform der Betätigungsanordnung ist es vorgesehen, dass die Betätigungsanordnung das Schaltelementteil aufweist. Die Betätigungsanordnung kann auch das gesamte Schaltelement aufweisen. Die Betätigungsanordnung kann auch das Getriebe aufweisen. Das Getriebe und das Schaltelement können auch zu der Betätigungsanordnung verschiedene Komponenten sein. Das Schaltelement kann Teil des Getriebes sein.

Ein zweiter Aspekt betrifft ein Fahrzeug, insbesondere ein Fahrrad, mit einem Getriebe, welches die Betätigungsanordnung gemäß dem ersten Aspekt aufweist, Jeweilige weitere Merkmale, Ausführungsformen und Vorteile sind den Beschreibungen des ersten Aspekts zu entnehmen. Umgekehrt stellen auch Merkmale, Ausführungsformen und Vorteile des zweiten Aspekts Merkmale, Ausführungsformen und Vorteile des ersten Aspekts dar.

Ein Schaltelement des Getriebes ist mittels der Betätigungsanordnung betätigbar. Das Fahrzeug ist vorzugsweise als Fahrrad, beispielsweise als E-Bike, Pedelec, Cargobike oder ähnliches, ausgebildet sein. Das Getriebe kann als Fahrradgetriebe ausgebildet sein. Beispielsweise kann das Getriebe als Nabengetriebe oder Tretlagergetriebe ausgebildet sein. Das Schaltelement kann manuell betätigbar sein, beispielsweise durch Rotation der Schaltwalze mittels eines Schalthebels über einen Schaltzug.

Ausführungsbeispiele der Erfindung werden in den folgenden Figuren veranschaulicht. Es zeigen:
Fig. 1 schematische Seitenansicht einer ersten Ausführungsform einer Betätigungsanordnung für ein Getriebe in einem ersten Zustand,
Fig. 2 schematische Seitenansicht der Betätigungsanordnung gemäß Fig. 1 in einem zweiten Zustand,
Fig. 3 schematische Seitenansicht der Betätigungsanordnung gemäß Fig. 1 in einem dritten Zustand,
Fig. 4 schematische Perspektivansicht der Betätigungsanordnung gemäß Fig. 1,
Fig. 5 schematische Perspektivansicht einer zweiten Ausführungsform der Betätigungsanordnung für ein Getriebe,
Fig. 6 schematische Perspektivansicht einer dritten Ausführungsform der Betätigungsanordnung für ein Getriebe,
Fig. 7 schematische Seitenansicht der Betätigungsanordnung gemäß Fig. 6,
Fig. 8 schematische Perspektivansicht einer vierten Ausführungsform der Betätigungsanordnung für ein Getriebe,
Fig. 9 schematische Perspektivansicht einer fünften Ausführungsform der Betätigungsanordnung für ein Getriebe,
Fig. 10 schematische Seitenansicht der Betätigungsanordnung gemäß Fig. 9,
Fig. 11 schematische Ansicht der Betätigungsanordnung gemäß Fig. 9 in einem ersten Zustand,
Fig. 12 schematische Seitenansicht der Betätigungsanordnung gemäß Fig. 9 in einem zweiten Zustand,
Fig. 13 schematische Seitenansicht der Betätigungsanordnung gemäß Fig. 9 in einem dritten Zustand,
Fig. 14 schematische Seitenansicht der Betätigungsanordnung gemäß Fig. 9 in einem vierten Zustand,
Fig. 15 schematische Seitenansicht der Betätigungsanordnung gemäß Fig. 9 in einem fünften Zustand,
Fig. 16 schematische Seitenansicht einer Befestigung eines Betätigungselements beispielhaft anhand der Betätigungsanordnung gemäß Fig. 5,
Fig. 17 schematische Perspektivansicht eines Befestigungselements für mehrere Betätigungselemente.

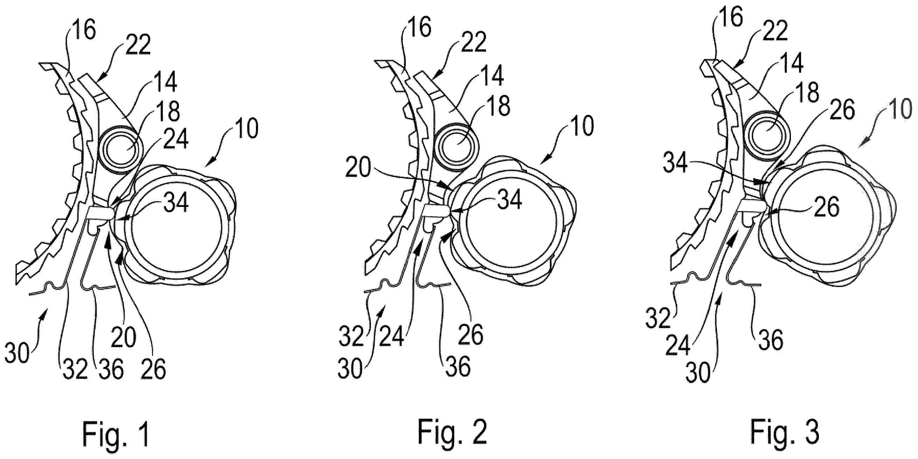

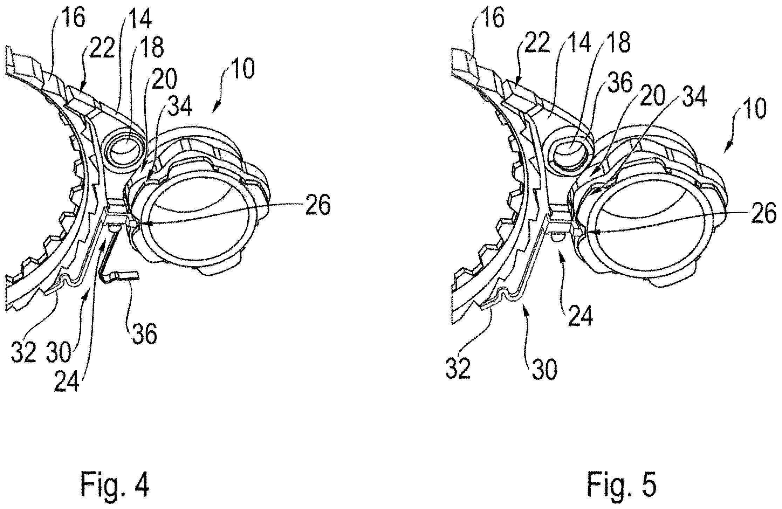

Fig.1 bis Fig. 4 veranschaulichen eine erste Ausführungsform einer Betätigungsanordnung für ein Fahrradgetriebe. Die Betätigungsanordnung weist eine Schaltwalze 10 mit einem Walzenkörper, eine Klinke 14 und ein als Bremsring ausgebildetes Schaltelementteil 16 auf. Die Klinke 14 ist verschwenkbar an einem Bolzen 18 gelagert. Die Klinke 14 ist zwischen einer Eingriffsposition, in welcher die Klinke 14 in einem Eingriff mit dem zugeordneten Schaltelementteil 16 ist, und einer Freigabeposition, in welcher die Klinke 14 das zugeordnete Schaltelementteil 16 freigibt, durch Verschwenken um den Bolzen 18 verstellbar. Fig. 1 zeigt die Freigabeposition der Klinke 14, in welcher ein Endbereich 22 der Klinke 14 von einer Außenverzahnung des Schaltelementteils 16 beabstandet ist. Fig. 3 zeigt die Eingriffsposition der Klinke 14, in welcher der Endbereich 22 der Klinke 14 mit der Außenverzahnung des Schaltelementteils 16 eingreift und somit eine Rotation des Schaltelementteils 16 blockiert. Die Schaltwalze 10 ist in eine erste Drehrichtung und eine dazu entgegengesetzte zweite Drehrichtung um deren Längsachse drehbar gelagert. Die Schaltwalze 10 weist mehrere gleichförmig ausgebildete Betätigungsflächen 20 auf, welche über den Außenumfang der Schaltwalze 10 als Nockenbahn angeordnet sind. Dies ist besonders gut in Fig. 4 zu erkennen. Je nachdem, ob eine Rotation des Schaltelementteils 16 freigegeben oder blockiert ist, sind bei dem Fahrradgetriebe unterschiedliche Gänge eingelegt.

In Fig. 1 ist zu erkennen, dass einer der Betätigungsbereiche 20 der Schaltwalze 10 gegen einen dem Endbereich 22 entgegengesetzten Endbereich 24 der Klinke 14 drückt. In diese Position wurde die Schaltwalze 10 durch eine Rotation in der Bildebene nach links gebracht, welche als erste Drehrichtung bezeichnet wird. Die Schaltwalze 10 kann aber auch durch eine entgegengesetzte Drehung in diese Position gebracht worden sein. Ein Startpunkt, welcher einem Kontakt des Endbereichs 22 mit einem Boden 26 des Betätigungsbereichs 20 bzw. der Nockenbahn entspricht, wird als erste Winkelstellung bezeichnet. In dieser ersten Winkelstellung, welche auch in Fig. 3 gezeigt ist, befindet sich die Klinke 14 in deren Eingriffsposition. Durch die Rotation in die erste Drehrichtung hat die Schaltwalze 10 die in Fig. 1 gezeigte zweite Winkelstellung erreicht.

Um nun die Klinke 14 ausgehend von der zweiten Winkelstellung der Schaltwalze 10 in die Eingriffsposition zu verstellen, wird die Schaltwalze 10 nun in der Bildebene nach rechts gedreht, also in eine zur ersten Drehrichtung entgegengesetzte zweite Drehrichtung. Diese Drehung entspricht der Bildfolge von Fig. 1 bis Fig. 3. Wie bereits in Fig. 2 zu erkennen ist, wird die Betätigungsfläche 20 ein Einfallen der Klinke 14 aus der Freigabeposition in die Eingriffsposition gestatten, da die Betätigungsfläche 20 nun von dem Endbereich 24 abgehoben ist.

Die Klinke 14 beginnt aber in dem Winkelbereich der Schaltwalze 10, welcher zwischen den in Fig. 1 und Fig. 2 gezeigten Stellungen liegt, noch nicht, sich Richtung des Schaltelementteils 16 mit seinem Endbereich 22 zu verschwenken, um einzufallen. Die Betätigungsanordnung weist nämlich eine Betätigungsvorrichtung 30 auf, welche dazu ausgebildet ist, die Klinke 14 erst aus der Freigabeposition in die Eingriffsposition zu verstellen, wenn die Schaltwalze 10 durch deren Rotation in die zweite Drehrichtung aus der zweiten Winkelstellung in eine dritte Winkelstellung verstellt wurde. Die dritte Winkelstellung befindet sich in Richtung der zweiten Drehrichtung ausgehend von der zweiten Winkelstellung zwischen der zweiten Winkelstellung und der ersten Winkelstellung und entspricht im Wesentlichen dem in Fig. 2 gezeigten Zustand. Die Betätigungsvorrichtung 30 ist dazu ausgebildet, die Klinke 14 bei der Rotation der Schaltwalze 10 in die zweite Drehrichtung aus der zweiten Winkelstellung heraus erst ab einem Passieren der dritten Winkelstellung in die Eingriffsposition zu drücken. Die Klinke 14 wird bei dem Verstellen aus der Freigabeposition in die Eingriffsposition durch die Betätigungsvorrichtung 30 mit einer größeren Geschwindigkeit verschwenkt als durch die Schaltwalze 10 bei dem Verstellen der Klinke 14 aus der Eingriffsposition in die Freigabeposition.

Die Betätigungsvorrichtung 30 weist dazu ein Betätigungselement 32 auf, welches als Federelement ausgebildet ist. Das Betätigungselement 32 ist dazu ausgebildet, die Klinke 14 bei der Rotation der Schaltwalze 10 in die zweite Drehrichtung erst ab einem Passieren der dritten Winkelstellung in die Eingriffsposition zu drücken. Die Schaltwalze 10 weist eine weitere Betätigungsfläche 34 auf, welche als zu der die Betätigungsfläche 20 aufweisende Nockenbahn parallele Nockenbahn ausgebildet ist. Dies ist besonders gut in Fig. 4 zu erkennen. Die weitere Betätigungsfläche 34 ist also bei der ersten Ausführungsform ebenfalls an einer Umfangsfläche der Schaltwalze 10 ausgebildet. Die weitere Betätigungsfläche 34 ist dazu ausgebildet, in dem Bereich von der zweiten Winkelstellung bis zu der dritten Winkelstellung das Betätigungselement 32 in einem vorgespannten Zustand zu halten und ein Drücken auf den Endbereich 24 der Klinke 14 zu verhindern. Ab dem Passieren der dritten Winkelstellung gleitet das Betätigungselement 32 an einer Flanke der weiteren Betätigungsfläche 34 ab und kann sich damit von dem Schaltelementteil 16 weg hin zu dem Boden 26 bzw. der Schaltwalze 10 verformen. Diese Verformung lässt sich auch aus einem Vergleich der Fig. 2 mit der Fig. 3 erkennen. Dadurch gibt die weitere Betätigungsfläche 34 das Verstellen der Klinke 14 aus der Freigabeposition in die Eingriffsposition durch die Betätigungsvorrichtung 30 frei. Die Flanke der weiteren Betätigungsfläche 34 ist dabei steiler als eine Flanke der Betätigungsfläche 20, wodurch sich eine höhere Verstellgeschwindigkeit in Richtung Eingriffsposition im Vergleich zu einer Verstellgeschwindigkeit in Richtung Freigabeposition ergibt.

Die Betätigungsvorrichtung 30 weist bei der ersten Ausführungsform eine Haltefeder 36 auf, welche die Klinke 14 in der Freigabeposition hält. In der ersten Ausführungsform ist die Haltefeder 36 als eine Blattfeder ausgebildet, welche gegen den Endbereich 24 der Klinke 14 in Richtung des Schaltelementteils 16 drückt und somit die Klinke 14 in Richtung deren Freigabeposition vorspannt. Dadurch wird verhindert, dass sich die Klinke 14 aufgrund von Erschütterungen in Richtung der Eingriffsposition verschwenkt, wenn die Betätigungsfläche 20 der Schaltwalze 10 bei der Rotation in die zweite Drehrichtung aus der ersten Winkelstellung in die zweite Winkelstellung schon den Kontakt mit dem Endbereich 24 der Klinke 14 verloren hat. Zudem dreht die Haltefeder 36 die Klinke 14 bei einem solchen unerwünschten Verstellen dann wieder zurück in deren Freigabeposition.

Die Federkraft des Betätigungselements 32 ist in jedem der in Fig. 1 bis Fig. 3 gezeigten Zustände größer als eine Federkraft der Haltefeder 36. Sowohl in deren maximal vorgespannten Zustand, wenn die weitere Betätigungsfläche 34 das Betätigungselement 32 wie in Fig. 1 gezeigt hin zu dem Schaltelementteil 16 gedrückt hat, als auch in deren maximal entspannten Zustand, wenn sich das Betätigungselement 32 hin zu dem Boden 26 verformt hat, ist die Federkraft des Betätigungselements 32 also größer als die Federkraft der Haltefeder 36, um so die Klinke 14 zuverlässig in die Eingriffsposition drücken zu können.

Bei der ersten Ausführungsform sind das Betätigungselement 32 und die Haltefeder 36 als separate Bauteile ausgebildet. In einer anderen Ausführungsform sind das Betätigungselement 32 und die Haltefeder 36 durch ein gemeinsames Bauteil ausgebildet, welches an jeweiligen Enden die jeweiligen Federn ausbildet.

Fig. 5 zeigt eine zweite Ausführungsform der Betätigungsanordnung. Bei dieser Ausführungsform ist lediglich die Haltefeder 36 anders als bei der ersten Ausführungsform ausgebildet. Die Haltefeder 36 ist bei der zweiten Ausführungsform als Wellfeder ausgebildet, welche axial um den Bolzen 18 herum gegen die Klinke 14 drückt.

Damit ist eine Reibkraft, welche überwunden werden muss, um die Klinke 14 zu verschwenken größer, als bei der ersten Ausführungsform. Auch dadurch wird die Klinke 14 in der Freigabeposition gehalten und ein Risiko eines unerwünschten Verstellens durch äußere Einflüsse verringert. Die Haltefeder 36 kann bei der zweiten Ausführungsform die Klinke 14 nicht in Richtung der Freigabeposition drücken. Dafür ist jedoch eine Verstellkraft zum Verschwenken der Klinke 14 zwischen deren Freigabeposition und Eingriffsposition, abgesehen von einer zwischen dem Schaltelementteil 16 und dem Endbereich 22 der Klinke 14 wirkenden Eingriffskraft, über deren gesamten Verschwenkbereich im Wesentlichen konstant.

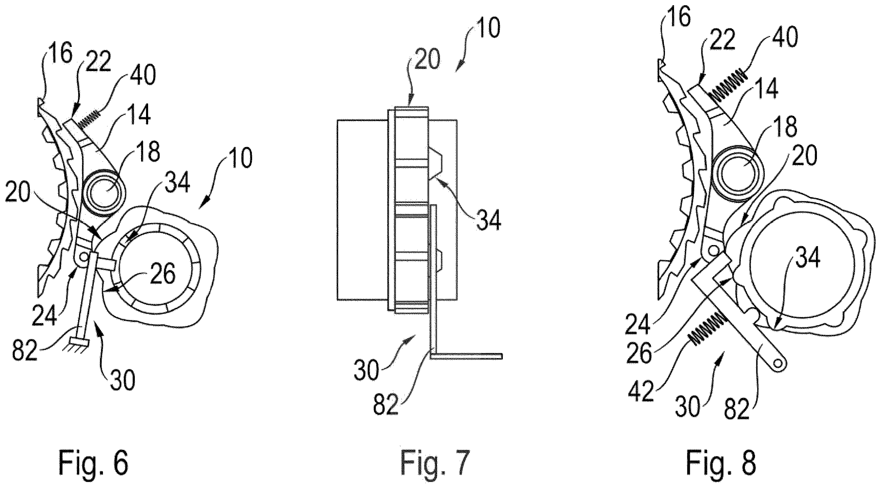

Fig. 6 und Fig. 7 zeigen eine dritte Ausführungsform der Betätigungsanordnung. Es werden lediglich Unterschiede zu der ersten Ausführungsform erläutert.

Bei der dritten Ausführungsform ist das ein Sperrelement 82ebenfalls als Federelement ausgebildet, welches durch Verformung das Verschwenken der Klinke 14 ab der dritten Winkelstellung freigibt. Das Sperrelement 82 drückt jedoch nicht die Klinke 14 in die Eingriffsposition. Stattdessen blockiert das Sperrelement 82 nur das Verschwenken der Klinke 14 mit dem Endbereich 22 in Richtung des Schaltelementteils 16 durch einen Eingriff mit dem Endbereich 24 der Klinke 14. Die Verstellung der Klinke 14 in Richtung der Eingriffsposition wird durch ein zusätzliches Betätigungselement bewirkt, welches als Federelement 40 ausgebildet ist. Das zusätzliche Federelement 40 stützt sich dafür mit einem Ende an einem Gehäuse ab und mit einem entgegengesetzten Ende an dem Endbereich 22 der Klinke 14. Das zusätzliche Federelement 40 ist dafür vorgespannt.

Zudem ist die weitere Betätigungsfläche 34 bei der dritten Ausführungsform nicht als Teil einer Nockenbahn an der Umfangsfläche der Schaltwalze 10 ausgebildet, sondern als Teil einer Nockenbahn einer Stirnfläche der Schaltwalze 10. Dies ist besonders gut in Fig. 7 zu erkennen. Die weitere Betätigungsfläche 34 drückt so das Sperrelement 82 axial von dem Endbereich 24 der Klinke 14 weg, um den dortigen Eingriff zu lösen und ein schlagartiges Verstellen der Klinke 14 in deren Eingriffsposition freizugeben. Das Sperrelement 82 ist also axial gesteuert.

Bei der dritten Ausführungsform entfällt die Haltefeder 36. Stattdessen übernimmt das Sperrelement 82 dessen Funktion, da das Sperrelement 82 die Klinke 14 bis zum Erreichen der dritten Winkelstellung in der Freigabeposition hält.

Fig. 8 zeigt eine vierte Ausführungsform der Betätigungsanordnung. Es werden lediglich Unterschiede zu der dritten Ausführungsform erläutert.

Bei der vierten Ausführungsform ist das Sperrelement 82 als Hebel statt als Federelement ausgebildet. Dieser Hebel ist um einen Bolzen mit einem der Klinke 14 abgewandten Ende verschwenkbar gelagert. Das Sperrelement 82 ist zudem mit einem zusätzlichen Federelement 42 hin zu einem Eingriff mit der Klinke 14 an deren Endbereich 24 vorgespannt. Dieser Eingriff blockiert wie bei der dritten Ausführungsform das Verschwenken der Klinke 14 hin zu der Eingriffsposition und hält die Klinke 14 in der Freigabeposition. Die weitere Betätigungsfläche 34, welche nun wie bei der ersten Ausführungsform wieder an der Umfangsfläche der Schaltwalze 10 angeordnet ist, drückt das Sperrelement 82 beim Passieren der dritten Winkelstellung bei Rotation der Schaltwalze 10 aus der zweiten Winkelstellung in die zweite Drehrichtung aus dem Eingriff mit der Klinke 14. Die Klinke 14 wird so freigegeben und durch das Federelement 40 schlagartig in die Eingriffsposition verstellt. Das Sperrelement 82 ist also radial gesteuert. Bei der vierten Ausführungsform sind die weitere Betätigungsfläche 34 und die Betätigungsfläche 20 in Umfangsrichtung zueinander versetzt.

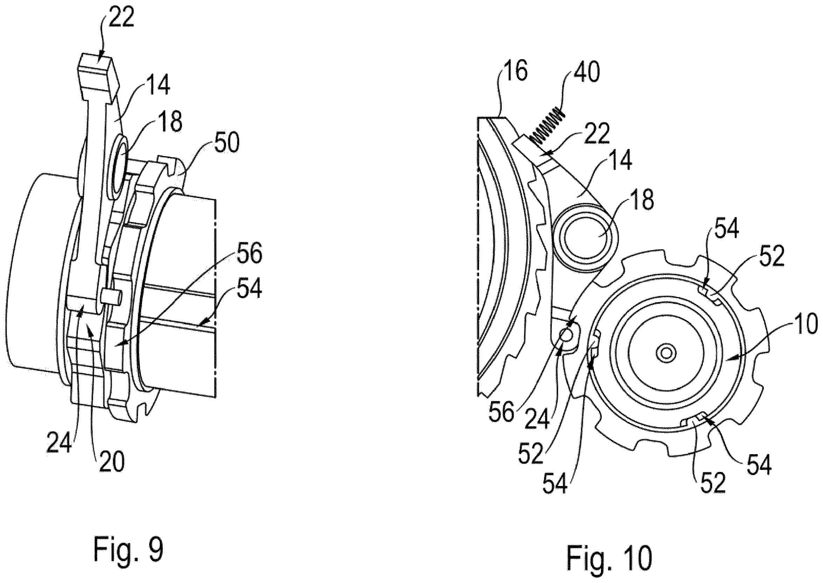

Fig. 9 bis Fig. 15 veranschaulichen eine weitere Ausführungsform der Betätigungsanordnung, bei welcher die Betätigungsvorrichtung 30 anders gestaltet ist. Die Betätigungsvorrichtung 30 weist ein Halteelement 50 auf, welches an der Schaltwalze 10 gehalten ist und um einen vorgegebenen Drehbereich relativ zu der Schaltwalze 10 zwischen einer ersten Relativstellung und einer zweiten Relativstellung rotierbar ist. Das Halteelement 50 ist dazu als Ring ausgebildet, welcher über die Schaltwalze 10 gestülpt ist und axial an der die Betätigungsfläche 20 aufweisenden Nockenbahn anliegt. Radial innen weist das Halteelement 50 drei Vorsprünge 52 auf, welche jeweils in einer zugeordneten Nut 54 der Schaltwalze 10 angeordnet sind. Diese Nuten 54 erlauben es, das Halteelement 50 um den vorgegebenen Drehbereich relativ zu der Schaltwalze 10 zu verdrehen. Bei Erreichen des Endes des vorgegebenen Drehbereichs wird das Haltelement 50 dann bei weiterer Rotation der Schaltwalze 10 durch die jeweilige Seitenwand der Nuten 54 an den Vorsprüngen 52 mitgenommen.

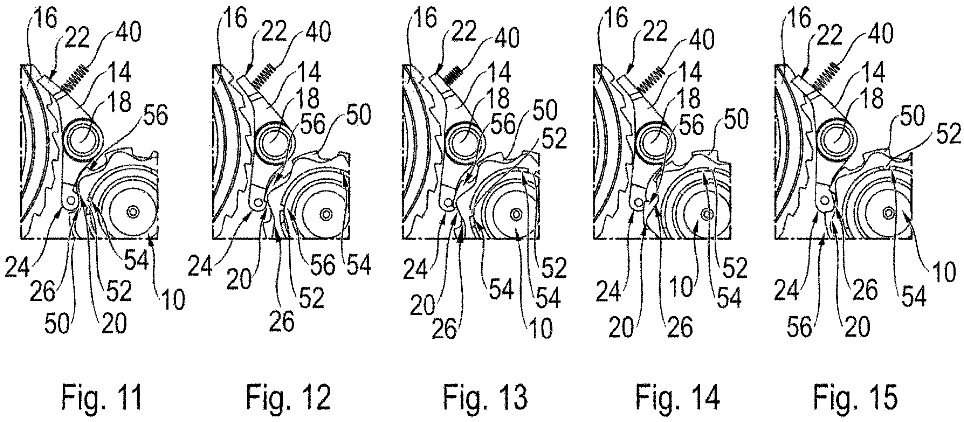

Das Halteelement 50 ist dazu ausgebildet, bei Rotation der Schaltwalze 10 in die erste Drehrichtung in seiner ersten Relativstellung zu sein, damit die Klinke 14 durch die Betätigungsfläche 20 der Schaltwalze 10 aus der Eingriffsposition in die Freigabeposition gedrückt wird. Eine solche Rotation der Schaltwalze 10 nach links ist beispielsweise durch die Abfolge der Fig. 11, Fig. 12 und Fig. 13 veranschaulicht. Die Vorsprünge 52 schlagen dabei an einer rechten Seitenwand der jeweiligen Nut 54 an und das Halteelement 50 wird mitgenommen. Fig. 13 veranschaulicht so die Schaltwalze 10 in der zweiten Winkelstellung mit dem Halteelement 50 in seiner ersten Relativstellung. Fig. 11 veranschaulicht die Schaltwalze 10 in der ersten Winkelstellung mit dem Halteelement 50 in seiner ersten Relativstellung.

Das Halteelement 50 ist dazu ausgebildet, bei Rotation der Schaltwalze 10 in die zweite Drehrichtung in seiner zweiten Relativstellung zu sein, um die Klinke 14 bis zu der dritten Winkelstellung der Schaltwalze 10 in der Freigabeposition zu halten. Bei Erreichen von der zweiten Winkelstellung der Schaltwalze 10, wie in Fig. 13 gezeigt, wird also die Drehrichtung der Schaltwalze 10 gewechselt und diese rotiert nach rechts. Das Haltelement 50 verbleibt dabei zunächst in seiner rotatorischen Position, sodass sich das Haltelement 50 relativ zu der Schaltwalze 10 nach links in seine zweite Relativstellung bewegt. Dadurch verbleibt eine Haltefläche 56 des Haltelements 50 zunächst trotz Rotation der Schaltwalze 10 in die zweite Drehrichtung in Position. Die Haltefläche 56 ist als Teil einer nockenartigen Gestaltung einer Umfangsfläche des Halteelements 50 ausgebildet. Wie in Fig. 13 und Fig. 14 zu erkennen ist, liegt die Klinke 14 mit deren Endbereich 24 auf der Haltefläche 56 auf, welcher zu diesem Zweck einen axial in Richtung des Halteelements 50 vorstehenden Zapfen aufweist. Dadurch wird ein Rückverstellen der Klinke 14 in die Eingriffsposition zunächst blockiert. Ab einer gewissen Drehstellung, nämlich einer Rotation der Schaltwalze 10 in die zweite Drehrichtung um eine Breite der Nut 54 aus der zweiten Winkelstellung heraus, wird dann das Haltelement 50 wieder mitgedreht. Dadurch wird dann die Haltefläche 56 an der Klinke 14 entlang bewegt. Bei Erreichen der dritten Winkelstellung der Schaltwalze 10 befindet sich eine Ecke eines vorstehenden Bereichs der Haltefläche 56 gerade noch im Eingriff mit dem Endbereich 24 der Klinke 14. Dies ist in Fig. 14 veranschaulicht. Bei einer weiteren Rotation passiert der Endbereich 24 diese Ecke und die Klinke 14 kann dann somit nahezu schlagartig durch das Federelement 40 in Richtung des Bodens 26 gedrückt werden. Damit gelangt dann die Klinke 14 mit hoher Verstellgeschwindigkeit in die Eingriffsposition bis die Schaltwalze 10 die erste Winkelstellung wieder erreicht hat.

Bei anschließender Rotation der Schaltwalze 10 in die erste Drehrichtung wird das Haltelement 50 nach ausreichender Rotation wieder mit den Vorsprüngen 52 an den Seitenwänden der Nuten 54 anliegen und mitrotiert, was der ersten Relatistellung entspricht. In dieser ersten Relativstellung ist die Haltefläche 56 so relativ zu der Betätigungsfläche 20 der Schaltwalze 10 positioniert, dass der Endbereiche 24 der Klinke 14 an der Betätigungsfläche 20 abgleitet und nicht an der Haltefläche 56. Die Haltefläche 56 ist also aus einem möglichen Kontakt mit dem Endbereich 24 der Klinke 14 heraus rotiert. Dadurch kann die Klinke 14 dann entsprechend mit geringem Kraftaufwand bis zum Erreichen der zweiten Winkelstellung aus der Eingriffsposition in die Freigabeposition von dem Betätigungsbereich 20 der Schaltwalze 10 gedrückt werden.

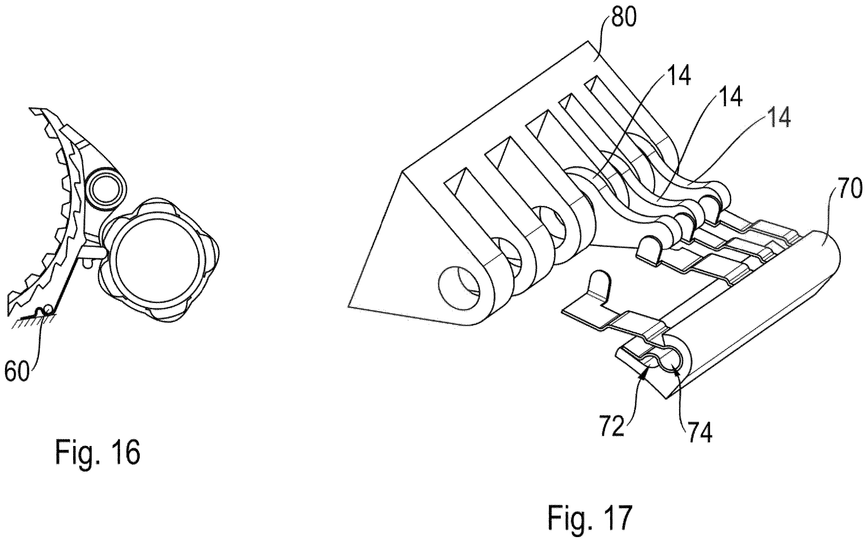

Fig. 16 veranschaulicht eine Befestigung des als Federelement ausgebildeten Betätigungselements 32 anhand der Ausführungsform von Fig. 5. Dafür ist ein Sicherungsstift 60 vorgesehen, welcher das Betätigungselement 32 an dem Gehäuse in einem gewellten Bereich fixiert. Ein Teilbereich des Betätigungselement 32 liegt dabei an dem Gehäuse hinter dem Sicherungsstift 60 flach an und bildet so ein Widerlager für die Federung. Dieser Stift kann auch über mehrere parallel nebeneinander angeordnete Betätigungselemente 32 zu deren Fixierung geschoben werden.

Fig. 17 veranschaulicht schematisch in einer Perspektivansicht ein Befestigungselement 70 für mehrere Betätigungselemente 32. Dieses Befestigungselement 70 ist als eine Art Hülse ausgebildet, welche eine Aufnahmeöffnung 72 für die mehreren Betätigungselemente 32 ausbildet. Diese können zur Montage und Befestigung seitlich in die Aufnahmeöffnung 72 unter Zusammendrücken eines jeweiligen darin anzuordnenden Endbereichs 74 der Betätigungselement 32 eingeschoben werden. In einer alternativen Ausführungsform ist das Befestigungselement 70 ohne Vorspannung in der Aufnahmeöffnung 72 aufgenommen und kann dann ohne Zusammendrücken montiert werden. Die als Federelemente ausgebildeten Betätigungselemente 32 werden so durch eine Federwirkung reibschlüssig geklemmt oder formschlüssig an dem Befestigungselement 70 gelagert je nachdem, ob die Feder zur Bohrung auch im ungespannten Zustand eine Vorspannung hat oder nicht.

In Fig. 17 ist zu erkennen, dass die nebeneinander geordneten Betätigungselemente 32 als gemeinsames Federbauteil einstückig ausgebildet sind. Dadurch können diese gemeinsam einfach montiert und befestigt werden. Zudem sind teilweise die mehreren nebeneinander angeordneten Klinken 14 gezeigt, welche mit einem nicht dargestellten Lagerbolzen gemeinsam an einem weiteren Befestigungselement 80 verschwenkbar gelagert sind. Für jede Klinke 14 weist die Schaltwalze 10 entsprechend korrespondierende Nockenbahnen mit Betätigungsflächen 20 und jeweilige weitere Nockenbahnen mit weiteren Betätigungsflächen 34 für die Freigabe der Betätigungselemente 32 auf. Jeder Klinke 14 ist dabei ein Schaltelementteil 16 zugeordnet, welches durch die jeweilige Klinke 14 in Eingriffsposition an dem Gehäuse festgesetzt wird. So können je nach rotatorischer Position der Schaltwalze 10 mehrere Schaltelementteile 16 blockiert oder freigegeben werden und dadurch durch eine Vielzahl von Gängen geschaltet werden.

### Bezugszeichen

- 10: Schaltwalze
- 14: Klinke
- 16: Schaltelementteil
- 18: Bolzen
- 20: Betätigungsfläche
- 22: Endbereich
- 24: Endbereich
- 26: Boden
- 30: Betätigungsvorrichtung
- 32: Betätigungselement
- 34: Betätigungsfläche
- 36: Haltefeder
- 40: Federelement
- 42: Federelement
- 50: Halteelement
- 52: Vorsprünge
- 54: Nut
- 56: Haltefläche
- 60: Sicherungsstift
- 70: Befestigungselement
- 72: Aufnahmeöffnung
- 80: Befestigungselement
- 82: Sperrelement

## Patentansprüche

1. Betätigungsanordnung für ein Getriebe, wobei die Betätigungsanordnung wenigstens eine verschwenkbar gelagerte Klinke (14) und wenigstens eine in eine erste Drehrichtung und eine dazu entgegengesetzte zweite Drehrichtung drehbare Schaltwalze (10) mit wenigstens einer Betätigungsfläche (20) aufweist, wobei die Klinke (14) zwischen einer Eingriffsposition, in welcher die Klinke (14) in einem Eingriff mit einem zugeordneten Schaltelementteil (16) ist, und einer Freigabeposition, in welcher die Klinke (14) das zugeordnete Schaltelementteil (16) freigibt, durch Verschwenken verstellbar ist, wobei die Schaltwalze (10) dazu ausgebildet ist, durch Rotation in die erste Drehrichtung von einer ersten Winkelstellung in eine zweite Winkelstellung die Klinke (14) mit der Betätigungsfläche (20) aus der Eingriffsposition in die Freigabeposition zu drücken und durch Rotation in die zweite Drehrichtung von der zweiten Winkelstellung in die erste Winkelstellung ein Einfallen der Klinke (14) aus der Freigabeposition in die Eingriffsposition zu gestatten, wobei die Betätigungsanordnung eine Betätigungsvorrichtung (30) aufweist, welche dazu ausgebildet ist, die Klinke (14) aus der Freigabeposition in die Eingriffsposition zu verstellen, wobei ein Verstellen der Klinke (14) aus der Freigabeposition in die Eingriffsposition durch die Betätigungsvorrichtung (30) bei der Rotation der Schaltwalze (10) in die zweite Drehrichtung erst bei einer dritten Winkelstellung der Schaltwalze (10) erfolgt, wobei die dritte Winkelstellung zwischen der ersten Winkelstellung und der zweiten Winkelstellung ist.

2. Betätigungsanordnung nach Anspruch 1, **dadurch gekennzeichnet, dass** die Betätigungsanordnung dazu ausgebildet ist, die Klinke (14) bei dem Verstellen aus der Freigabeposition in die Eingriffsposition mit einer größeren Geschwindigkeit zu verschwenken als bei dem Verstellen aus der Eingriffsposition in die Freigabeposition.

3. Betätigungsanordnung nach Anspruch 1 oder 2, **dadurch gekennzeichnet, dass** die Betätigungsvorrichtung (30) ein Betätigungselement (32) aufweist, welches dazu ausgebildet ist, die Klinke (14) bei der Rotation der Schaltwalze (10) in die zweite Drehrichtung erst ab einem Passieren der dritten Winkelstellung in die Eingriffsposition zu drücken.

4. Betätigungsanordnung nach Anspruch 3, **dadurch gekennzeichnet, dass** das Betätigungselement (32) als Federelement ausgebildet ist.

5. Betätigungsanordnung nach Anspruch 4, **dadurch gekennzeichnet, dass** die Betätigungsanordnung ein Befestigungselement (70) aufweist, an welchem das Federelement gelagert ist.

6. Betätigungsanordnung nach einem der vorhergehenden Ansprüche, **dadurch gekennzeichnet, dass** die Betätigungsanordnung eine Haltefeder (36) aufweist, welche die Klinke (14) in der Freigabeposition hält.

7. Betätigungsanordnung nach einem der vorhergehenden Ansprüche, **dadurch gekennzeichnet, dass** die Schaltwalze (10) dazu ausgebildet ist, das Verstellen der Klinke (14) aus der Freigabeposition in die Eingriffsposition durch die Betätigungsvorrichtung (30) freizugeben.

8. Betätigungsanordnung nach Anspruch 7, **dadurch gekennzeichnet, dass** die Schaltwalze (10) eine weitere Betätigungsfläche (34) aufweist, mittels welcher das Verstellen der Klinke (14) aus der Freigabeposition in die Eingriffsposition durch die Betätigungsvorrichtung (30) freigebbar ist.

9. Betätigungsanordnung nach Anspruch 8, **dadurch gekennzeichnet, dass** die weitere Betätigungsfläche (34) an einer Umfangsfläche der Schaltwalze (10) ausgebildet ist.

10. Betätigungsanordnung nach Anspruch 8, **dadurch gekennzeichnet, dass** die weitere Betätigungsfläche (34) an einer Stirnfläche der Schaltwalze (10) ausgebildet ist.

11. Betätigungsanordnung nach Anspruch 1 oder 2, **dadurch gekennzeichnet, dass** die Betätigungsvorrichtung (30) ein Halteelement (50) aufweist, welches an der Schaltwalze (10) gehalten ist und um einen vorgegebenen Drehbereich relativ zu der Schaltwalze (10) zwischen einer ersten Relativstellung und einer zweiten Relativstellung rotierbar ist, wobei das Halteelement (50) dazu ausgebildet ist, bei Rotation der Schaltwalze (10) in die erste Drehrichtung in seiner ersten Relativstellung zu sein, damit die Klinke (14) durch die Betätigungsfläche (20) der Schaltwalze (10) aus der Eingriffsposition in die Freigabeposition gedrückt wird und wobei das Halteelement (50) dazu ausgebildet ist, bei Rotation der Schaltwalze (10) in die zweite Drehrichtung in seiner zweiten Relativstellung zu sein, um die Klinke (14) bis zu der dritten Winkelstellung der Schaltwalze (10) in der Freigabeposition zu halten.

12. Betätigungsanordnung nach einem der vorhergehenden Ansprüche, **dadurch gekennzeichnet, dass** die Betätigungsanordnung das Schaltelementteil (16) aufweist.

13. Fahrzeug, insbesondere Fahrrad, mit einem Getriebe, welches die Betätigungsanordnung nach einem der vorhergehenden Ansprüche aufweist, wobei ein Schaltelement des Getriebes mittels der Betätigungsanordnung betätigbar ist.
